# EUROPEAN PATENT APPLICATION

(11) **EP 4 703 131 A1**
(43) Date of publication of application: **04.03.2026**
(21) Application number: 24198164.6
(22) Date of filing: 03.09.2024
(51) Int. Cl.: B29D 99/00

(54) **METHOD AND APPARATUS FOR MANUFACTURING AN ASSEMBLY OF HONEYCOMB STRUCTURES AND ARTICLES COMPRISING THE ASSEMBLY OF HONEYCOMB STRUCTURES**

(71) Applicant: Teijin Aramid B.V., 6824 BW Arnhem (NL)
(72) Inventor: REHBEIN, Johannes, 59505 Bad Sassendorf (DE); MUGGE, Edo, 6605 TG Wijchen (NL); VU, Yen, 6932 AT Westervoort (NL); HENDRIKS, Antonius J. J., 6663 AL LENT (NL)
(74) Representative: CPW GmbH

(57) **Abstract**

A method for manufacturing an assembly of honeycomb structures comprising the alternating placement of rows of rods (1.1, 1.2, 3.1, 3.2, 4.1, 4.2) and prepreg sheets, (5, 6) optionally exposing the assembly of honeycomb structures to a temperature that softens the resin for provisionally adhering the formed prepreg sheets to each other at the locations where two prepreg sheets(5, 6) are in contact to provisionally consolidate the honeycomb structure, exposing the assembly of honeycomb structures with the rows of rods (1.1, 1.2, 3.1, 3.2, 4.1, 4.2) inside to a temperature which hardens the resin, and removing the rows of rods,

characterized in that the rods have a rectangular cross section and that the prepreg sheet is a paper sheet comprising resin. Also claimed are an assembly of honeycomb structures, a sandwich panel and shaped articles and an apparatus.

## Description

The invention pertains to a method for manufacturing an assembly of honeycomb structures, to the assembly of honeycomb structures obtained by the method and to articles (e.g. a sandwich panel or a shaped article, in particular an aircraft part) comprising the honeycomb structure or parts thereof. The invention also pertains to a corresponding apparatus.

Honeycomb structures are used in many applications where good structural properties have to be combined with low weight. They are used in e.g., aerospace applications, but also in other transport applications, such as in ships, trains, and cars. They are also attractive for use in temporary structures such as, among others, military structures.

Honeycomb structures based on aramid paper, including meta-aramid and para-aramid paper have been used for many years. They have been found to be attractive, in particular because they show good strength to weight ratio, a high stiffness, excellent stability to moisture, fire, and high temperatures, and excellent corrosion resistance.

Conventionally, different methods to manufacture honeycombs are known, in particular the expansion process and the corrugation (or welding) process. In the expansion process, sheets of material are cut, printed - which means that stripes of adhesive (node adhesive) are applied to the sheet of material, the sheets are stacked upon each other such that the sheets are glued together where the stripes of adhesive are located. Subsequently, the sheets are expanded to result in honeycombs. In the corrugation method, the sheets for forming the honeycombs are specifically cut and corrugated into shapes that form half of the cells of honeycombs. Subsequently, the corrugated sheets are joint at node locations with different methods, e.g. welding (for metal sheets) or glueing (with a node adhesive). If the sheets upon which the honeycombs are based are made from a material other than metal (e.g. paper or fabric), the block has to be stiffened by applying and hardening (e.g. curing) a resin. The resin is usually applied and hardened in multiple steps.

Both methods will result in a honeycomb block, which is cut into slices to result in a honeycomb which can be combined with sheets into a sandwich panel. Both, the expansion and the corrugation process are complex and require multiple steps. Hence, alternative processes have been developed.

GB577790 pertains to the manufacture of light non-metallic structural materials or composites. The material is a honeycomb-like, cellular formation. A synthetic resin impregnated fabric is wrapped or zig-zagged around a number of hexagonal rods (or formers). The block of rods and fabric is then placed in a mould to apply pressure and heat to set the resin. GB577790 is silent on using resin-impregnated paper sheets as starting material. GB577790 is also silent on using rods with rectangular cross section.

DE102012101361A1 describes a method for making a honeycomb block by attaching one layer made of two substrate sheets (i.e. one cell layer) to a honeycomb block. For making the layer, hexagonal rods are employed. The making of the one layer and the attachment of said layer to the block occur simultaneously. When the two substrate sheets are connected with the block, heat and pressure are exerted via the stamps to crosslink the resin. The steps are then repeated to attach the next layer of cells. The process is complicated since it requires the layer-wise building up and curing of each layer of the honeycomb.

US2004/0219330A1 discloses a honeycomb core composite article and a method and apparatus for making the same. The process involves that the sheet material is shaped between a bolster plate with heating elements and fixture pins. After the placing and shaping of the first sheet the sheet is pressed and heated such that the contact surfaces, or nodes, of the fabric are cured between each fixture pin and each heating element using a press. The heating elements provide heat and concentrate pressure during each nodal cure cycle. Once the nodes have been cured, the bolster plate pins are then removed. Thereafter, the forming and curing cycles are repeated until a core of the desired core height is achieved. Hence, US2004/0219330A1 discloses a complicated process for the shaping of honeycombs where each layer is separately cured and shifted before the next layer of material is applied.

US3678558 discloses a method of fabricating cellular, honeycomb-like structures by utilizing cooperating mandrels and rams to deform and shape relatively collapsible material into a cellular array. A plurality of sheets are formed into cells, so-called doublets, with the mandrels still in place. Subsequently, multiple doublets are stacked upon one another and the abutting portions or nodes of the stacked members are adhesively coated and bonded to form an integrated whole. This process requires the separate manufacture and subsequent joining of multiple layers by applying a separate adhesive. In addition, US3678558 is silent on using resin-impregnated aramid paper as starting material.

There is need in the art for an improved process to manufacture honeycombs. In particular, there is need in the art for a manufacturing process for honeycombs which is simple, cost-effective and eliminates the application of resin and curing in multiple steps (and hence reduced process steps and energy consumption). In addition, it is desirable to provide a process which allows the manufacture of honeycombs of irregular (i.e. net or near-net) shapes without creating a lot of waste material (which is conventionally created when a cubic honeycomb block is machine-cut into an irregular shape by cutting, drilling or milling away the superfluous parts). In addition, it would be advantageous to provide a process which allows the use of the same process equipment irrespective of the nature, in particular the thickness, of the prepreg sheet.

The present invention provides a process for manufacturing honeycomb core which solves these problems.

The invention pertains to a method for manufacturing an assembly of honeycomb structures comprising the steps of:
a) placing a first row of rods adjacent to a support,
b) placing a first prepreg sheet adjacent to the first row of rods,
c) placing a second row of rods adjacent to the first prepreg sheet such the second row of rods is off-set from the position of the first row of rods, and forming the first prepreg sheet between the rods of the first row of rods and the rods of the second row of rods to form a first structure,
d) placing a second prepreg sheet adjacent to the second row of rods,
e) placing a third row of rods adjacent to the second prepreg sheet such the third row of rods is positioned corresponding to the position of the first row of rods, and forming the second prepreg sheet between the rods of the second row of rods and the rods of the third row of rods to form the first structure into a honeycomb structure,
f) repeating steps b), c), d) and e) at least one time to create an assembly of honeycomb structures,
g) completing the forming process by arranging a row of rods adjacent to the assembly of honeycomb structures,
h) optionally exposing the assembly of honeycomb structures to a temperature that softens the resin for provisionally adhering the formed prepreg sheets to each other at the locations where two prepreg sheets are in contact to provisionally consolidate the honeycomb structure,
i) exposing the assembly of honeycomb structures with the rows of rods inside to a temperature that causes hardening of the resin, and
j) removing the rows of rods after process step i),
characterized in that the rods have a rectangular cross section and that the prepreg sheet is a paper sheet comprising resin.

In one embodiment, the present invention provides a method for manufacturing an assembly of honeycomb structures comprising the steps of:
a) placing a first row of rods on a support,
b) placing a first prepreg sheet on top of the first row of rods,
c) placing a second row of rods on the first prepreg sheet such the second row of rods is off-set from the position of the first row of rods, and forming the first prepreg sheet between the rods of the first row of rods and the rods of the second row of rods to form a first structure,
d) placing a second prepreg sheet on top of the second row of rods,
e) placing a third row of rods on top of the second prepreg sheet such the third row of rods is positioned on top of the position of the first row of rods, and forming the second prepreg sheet between the rods of the second row of rods and the rods of the third row of rods to form the first structure into a honeycomb structure,
f) repeating steps b), c), d) and e) at least one time to create an assembly of honeycomb structures,
g) completing the forming process by arranging a row of rods on top of the assembly of honeycomb structures,
h) optionally exposing the assembly of honeycomb structures to a temperature that softens the resin for provisionally adhering the formed prepreg sheets to each other at the locations where two prepreg sheets are in contact to provisionally consolidate the honeycomb structure,
i) exposing the assembly of honeycomb structures with the rows of rods inside to a temperature that causes hardening of the resin, and
j) removing the rows of rods after process step i),
characterized in that the rods have a rectangular cross section and that the prepreg sheet is a paper sheet comprising resin.

The process according to the invention is simpler than the processes of the prior art, because it may eliminate the nodeline printing step and multiple steps of application of the resin to the honeycomb and multiple curing or hardening steps. The process preferably requires only one curing or hardening step for the manufacture of an assembly of honeycomb structures. Preferably, at most two curing or hardening steps are applied to the prepreg sheets and the assembly of honeycomb structures. By using resin-impregnated dry paper sheets, it is possible to assemble the desired honeycomb block in multiple layering steps without the use of additional node adhesive. The complicated steps of the expansion and corrugation processes, in particular the careful preparation of the sheet material by printing, adhesive application or folding may be avoided.

In addition, due to the use of rectangular rods for forming the honeycomb cells, the removal of the rods is easier and the same rods may be applied for forming prepreg sheets of different thickness. Further, the pressure during hardening of the resin is only applied to the sites where the cells adhere to each other. This results in a bending of the paper similar to the expansion process (i.e. not a corrugation or folding with sharp folds of the sheet material).

The method may be carried out in different three-dimensional orientations, e.g. from back to front or front to back (where the support, rods and prepreg sheets are placed adjacent to each other) or from bottom to top (where the support is at the bottom and rods and prepreg sheets are placed on top of it and each other), as long as the necessary pressure for keeping the rods and prepreg sheets in place can be asserted.

The prepreg sheets comprise a paper sheet. Usually, paper-making techniques use paper machines to continuously produce rolls of paper. Typically, paper is produced from slurry comprising the fibrous paper components that can be fed onto a moving screen from a head box of the paper machine. During the process and depending on the settings used, the fibers may align with each other and align with a direction in which the screen is moving. This alignment direction of underlying fibers is called the major direction of the paper and is in line with the machine direction (MD). Therefore, when the paper is wound at the end of the papermaking process, the paper roll is wound up in the machine direction. Because of the alignment of underlying fibers in the machine direction of the paper, the paper may exhibit greater strength in the machine direction when compared to a cross machine direction (CMD or CD or XD) that is perpendicular to the machine direction. In instant process, the prepreg sheets may be used in any paper orientation, i.e. the rod length (as defined below) may be parallel or perpendicular to the machine direction of the paper (or the cross machine direction of the paper) comprised in the prepreg sheets.

Preferably, the prepreg sheets are placed in such manner, that the rod length is parallel to the machine direction of the paper comprised in the prepreg sheet (in case that the paper comprised in the prepreg sheet is stronger in the MD). In this way, optimal use of the strongest dimension of the paper in the honeycomb can be made.

If the prepreg sheet comprises a paper without a difference in strength in MD and CMD, the prepreg sheet is preferably used with the MD perpendicular to the rod length.

Further advantages of the present invention and specific embodiments thereof will become apparent from the further specification.

The common feature of honeycombs is a lattice of hollow, thin-walled cells. The cells are often hexagonal. For application, the lattice of cells is usually covered on one or both sides with a face sheet to form so-called sandwich panels.

Similar light-weight materials are folded cores. These are tessellated three-dimensional structures of folded geometric patterns folded from a relatively thin planar sheet material. In contrast to honeycombs, folded cores do not have separate, enclosed cells. Such folded or tessellated sheet structures are discussed in US6935997 and US6800351.

For the purpose of the application the term "honeycomb" refers to a structure of adjoining hexagonal cells (thus excluding tessellated folded cores), the sandwich panels made from them or parts or pieces of either. A honeycomb structure may refer to one layer or row of hexagonal cells. An assembly of honeycomb structures may also be referred to as a honeycomb block. Instant process results in an assembly of honeycomb structures comprising hexagonal cells, preferably consisting of hexagonal cells and half hexagonal cells.

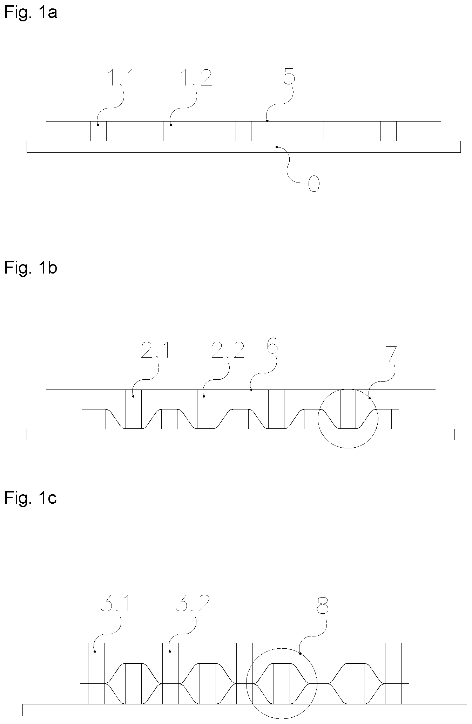

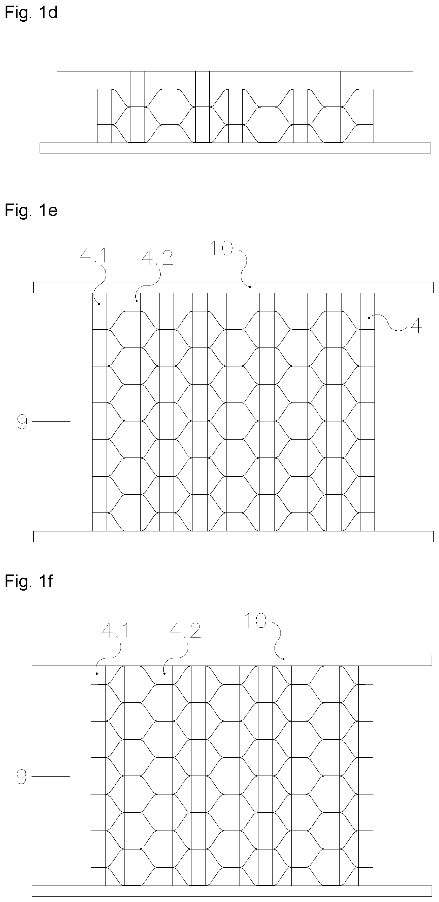

A schematic overview of an embodiment of the method is shown in Figure 1, panels a) to f) showing a side view of the assembly steps. The following references are used:
(0) Support
(1) First row of rods comprising rods 1.1, 1.2 etc.
(2) Second row of rods comprising rods 2.1, 2.2 etc.
(3) Third row of rods comprising rods 3.1, 3.2 etc.
(4) Last row of rods comprising rods 4.1, 4.2 etc.
(5) First prepreg sheet
(6) Second prepreg sheet
(7) First structure
(8) Honeycomb structure
(9) Assembly of honeycomb structures
(10) Pressure means

While the drawings of Fig. 1 show a method where the rows of rods and the prepreg sheets are assembled from the bottom up to the top, the skilled person will appreciate that the method may also be carried out with a different three-dimensional orientation, e.g. from back to front or front to back. In those embodiments of the process, the rods and prepreg sheets are not placed "on" or "on top" of each other, but instead adjacent to each other to result in the same first structure, honeycomb structure and assembly of honeycomb structures.

As can be seen in Fig. 1a, a first row of rods (1) comprising rods 1.1, 1.2 etc. is placed on a support (0). The support may be any stiff surface, e.g. a plate or a side or part of a frame. Usually, the support will have a flat surface. However, in certain embodiments, the support may also have a non-flat surface, e.g. formed by steps (to allow the manufacture of undulating honeycomb blocks).

The rods of the first row of rods will usually have half the height of the heights of the rods of the subsequent rows (e.g. of the second and third row of rods). The half height corresponds to a half cell size of the hexagonal cells of the assembly of honeycomb structures. The distance between the rods will usually be equal and the rods will be arranged parallel, i.e. equidistant to each other with respect to their length (as defined below). On top of the first row of rods a first prepreg sheet (5) is placed. Subsequently, as shown in Fig. 1b, a second row of rods (2) is placed on the first prepreg sheet (5). The second row of rods (2) comprises rods 2.1, 2.2, etc. The rods of the second row of rods are placed off-set from the position of the first row of rods, usually they will be placed at a position corresponding to the middle of the distance between the rods of the first row of rods (to create adjacent hexagonal cells having the same shape). The distance between rods is measured from the center of the cross section of one rod to the center of the cross section of the adjacent rod in the same row. The first prepreg sheet is formed, e.g. bent, between the rods of the first and second row of rods. The prepreg sheet partly conforms to the shape of the rods (by contact and in part without contact). In this way a first structure (7) is formed which corresponds to one half of the hexagonal cells to be formed. Subsequently, a second prepreg sheet (6) is placed on top of the second row of rods (2). A third row of rods (3) is placed on top of the second prepreg sheet so that the third row of rods is positioned on top of the position of the first row of rods (Fig. 1c). In this way, the second prepreg sheet is formed between the rods of the second row of rods and the rods of the third row of rods and the first structure (7) is formed into a honeycomb structure (8), i.e. a row or array of hexagonal cells. Basically, the rods of the third row of rods are placed on top of the rods of the first row of rods with the first prepreg sheet and second prepreg sheet being in between the blocks where they are in contact.

The steps of applying rows of rods and prepreg sheet(s) are repeated at least once, preferably multiple times until the desired size of the assembly of honeycomb structures (9) is obtained (Figs. 1d, 1e and 1f). For example, the steps may be repeated 4 to 1000 times, preferably 100 to 770 times. For example, an assembly of honeycomb structures with a block size of 1220 mm and a cell size (as defined below) of 3.2 mm may be created by carrying out steps a) to e) and repeating steps b) to e) 763 times (and comprises 382 rows of honeycomb structures). The rods of every second row of rods will be placed at the same or corresponding position (i.e. the uneven row numbers - first row, third row; and the even row numbers - second row, fourth row etc.) while the rods of adjacent rows (i.e. first row of rods and second row of rods) are positioned off-set from each other, in particular positioned in the middle between the rods of the adjacent row (Fig. 1d). On top of the last prepreg sheet, a last row of rods is placed. The last row of rods may comprise alternating rods having half height and full height cross sections (Fig. 1e) or alternatively, rods having half height cross section are placed on every second rod of the penultimate row of rods before the last row of rods and a pressure means (10) is placed adjacent to the last row of rods (Fig. 1f). The pressure means may make contact with the last row of rods and the last prepreg sheet in this embodiment (Fig. 1f). The pressure means (10) may be any sort of stiff part that serves to exert pressure on the prepreg and the rods of the last row of rods.

During the assembly and the subsequent temperature treatment (step i) (and optional step h), the position of the prepreg sheets and the rods relatively to each other is fixed. This may be realized by using a frame, placing weights on the pressure means (and/or the support) or by incorporating the pressure and/or support as part of a frame.

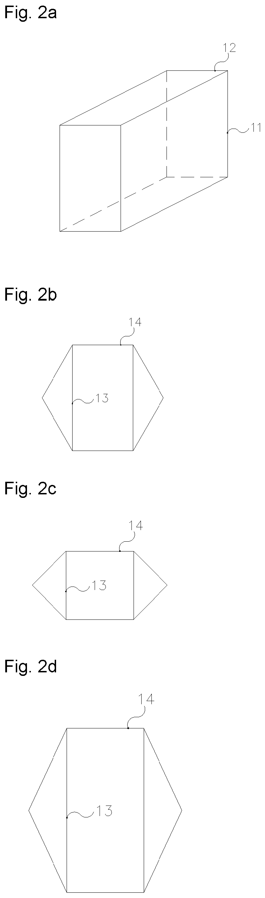

The rod cross sectional dimensions and the rod placement (i.e. the distance between the rods of a row) creates the hexagonal cell openings and defines the shape and the cell size of the hexagonal cells. The cell size is defined by a distance between those two parallel sides of the honeycomb structure where two prepreg sheets are in contact (and in between rods of adjacent rows of rods). Potential relative rod and hexagonal cell dimensions are schematically shown in Figure 2. The cell size (Fig. 2b, (13)) corresponds to the height of the rods (Fig. 2a, (11)) used for creating the hexagonal cells, i.e. the full height rods, such as e.g. used in the second and third row of rods. The width of the rods (12) defines the length of the two sides of the hexagon (14) that are adhered to the adjacent hexagonal cell (the hexagonal cells below or above in Fig. 1d). The width and height of the rods define the rectangular cross section of the rods (which is perpendicular to the length). With instant method it is also possible to manufacture extended (or flattened) hexagonal cells, see Figures 2d and 2c respectively. In those cases, the adjacent rods within one row are placed either at greater or smaller distance from each other. Alternatively, such flattened or extended hexagonal cells may also be created by using rods with a different width/height ratio. The distance between rods (measured from the center of the cross section of one rod to the center of the cross section of the adjacent rod in the same row) may be varied in dependence on the desired size and the desired shape of the hexagonal cell and will usually be at least twice the width of the rod and at most 8 times the width. For an assembly of honeycomb structures with close to regular hexagonal cells, the distance will usually be in the range from 5 mm to 20 mm. For example, for a cell size of 3.2 mm, the distance may be 5.77 mm, for a cell size of 10 mm, the distance may be 18.38 mm, where the honeycomb structure is a regular hexagon (i.e. close to equilateral and equiangular).

Preferably, the rods have a height in the range from 1.5 to 25 mm, more preferably 3 to 10 mm.

Preferably, the rods have a width in the range from 1.5 to 5 mm.

Usually, the height of the rods will be longer than the width of the rods. In one embodiment (regular hexagon), the aspect ratio of the height (11) divided by the width (12) of the rods is in the range of 1.5 to 3, preferably 2.1 to 2.6. For example, for a cell size of 10 mm, a rod with a width of 4 mm and a height of 10 mm may be used, for a cell size of 4.8 mm, a rod with a width of 2 mm and a height of 4.8 mm and for a cell size of 3.2 mm a rod with a width of 1.5 mm and a height of 3.2 mm may be used. The third dimension of the rods is the length. The rod length defines the maximum depth of the assembly of honeycomb structures, i.e. the depth of the hexagonal cells of the assembly of honeycombs before cutting. The length may be in the range of 2 m, preferably 1 m. This would e.g. allow the manufacture of a typical honeycomb block (i.e. assembly of honeycomb structures) of 2440x1220x914 mm.

The rods used in instant process have a rectangular cross section, preferably all rods used in an assembly have a rectangular cross section. Due to the use of rods with rectangular cross section instead of hexagonal cross section, preferably the prepreg sheet is not folded, but rather bent, which produces honeycomb structures with a similar structure as produced by the expansion process. In addition, the rods may be easily removed from the hardened assembly of honeycomb structures.

The rods may be made from any heat-resistant material which retains its shape during the assembly of the honeycomb structures and the subsequent temperature treatment and pressure forces. Preferably, rods with a non-sticky surface are used, in particular rods consisting of polytetrafluoroethylene or silicone or rods comprising a surface comprising polytetrafluoroethylene, silicone or a release agent. A release agent is a substance applied to a surface to prevent or at least reduce the adhesion or sticking of the prepreg sheets to the rods. The non-sticky component may be applied as a coating to the rod or in any other suitable form, e.g. as fabric or net. A suitable release agents is e.g. Chemlease 2754W by ChemTrend. These materials may e.g. be applied to rods made from metal, e.g. steel, stainless steel or aluminum.

The use of rods with a non-sticky surface allows for a further improved removal of the rods from the assembly of honeycomb structures.

After the assembly steps, the assembly of honeycomb structures may optionally be exposed to a temperature that softens the resin used for impregnating the prepreg sheet for provisionally adhering the formed prepreg sheets to each other at the locations where two prepreg sheets are in contact to provisionally consolidate the honeycomb structure. In this step, the resin present in the prepreg sheets will be softened and cause the preliminary adherence where the prepreg sheets are contacted due to the positioning of the rods. The temperature will be chosen dependent on the resin. For thermoset resins, a temperature below the hardening temperature of the resin is chosen. For a thermoset phenolic resin, this heat treatment may e.g. be carried out in an oven at a temperature of 40 to 100°C for a time of 10 to 30 minutes. For a vitrimer resin, a vitrimer-like resin and a thermoplastic resin, a temperature above the glass transition temperature Tg of the resin is chosen. At this temperature, the resin will start to soften and flow.

To stiffen the assembly of honeycomb structures, the resin has to be hardened.

This is realized by exposing the assembly of honeycomb structures, with the rows of rods remaining inside, to a temperature that causes the hardening (or setting or curing) of the resin. In the case of a thermoset resin, the assembly of honeycomb structures needs to be exposed to a temperature above the curing temperature. Where a vitrimer, vitrimer-like or thermoplastic resin is used, the assembly of honeycomb structures is exposed to the temperature that hardens this resin which may be a lower temperature than the one used in optional step h). The skilled person is able to choose the duration and the temperature in dependence on the resin used to impregnate the paper sheet. For thermoset phenolic resin, the curing may e.g. take place by heating for 30-60 minutes at 145 to 180°C, e.g. in an oven.

After the hardening of the resin, the rows of rods are removed from the assembly. This can e.g. be done by slightly compressing the honeycomb in the direction perpendicular to the compression direction used for the rods. By doing this, the honeycomb cells will expand in the direction of the rods, giving room to remove them.

The honeycomb structure of instant invention is formed from prepreg sheets. The prepreg sheet is a paper sheet comprising a resin. The prepreg sheet is dry to allow the assembly of the sheets. Dry means that the prepreg sheet has been impregnated with the resin and subsequently been dried to remove the solvent and/or dispersing agent. The impregnated paper sheet comprising the resin is basically non-sticky. The prepreg sheet needs to be still pliable and foldable to be suitable for the process of instant invention. Hence, in prepreg sheets comprising a thermoset resin, the resin is not hardened or cured or at most partially hardened or cured, i.e. not set to allow the subsequent forming of the honeycomb structures. The thermoset resin may be partially cured or partially hardened or merely dried. Prepreg sheets comprising vitrimer or vitrimer-like resins may be uncured, partially or completely cured since the prepreg sheet is still foldable in those states. Prepreg sheets comprising a thermoplastic resin may be merely impregnated.

The paper sheet preferably comprises aramid fibers. In one embodiment, the aramid fibers comprise aramid short cut fibers, aramid fibrils, aramid fibrids and/or aramid pulp.

Besides aramid fibers the paper sheet may comprise further fibrous material as paper components, e.g. glass fibers, carbon fibers, PET (polyethylene terephthalate) fiber or resin and/or other synthetic fibers. Preferably, the paper contains at least 80 wt% of aramid fibers, calculated based on the fibrous components of the paper. It may be preferred for the paper to contain at least 90 wt% of aramid fibers, in particular at least 95 wt% of aramid fibers or the fibrous components of the paper may consist of aramid fibers.

Paper sheets based on aramid fibrous components have e.g. been described in EP2661522, WO2019/228972 and WO2013/117462. Also WO2009/108672, US8764941, US2011/0244175 and US9976258 disclose honeycombs comprising papers based on para-aramid fibrous components.

In a preferred embodiment, the paper sheet comprises 10-40 wt.% of aramid fibrid and 40-90 wt.% of aramid fiber (based on the dry paper components, i.e. excluding any resin) where the aramid can be para-aramid and/or meta-aramid.

Within the context of the present specification the term aramid fibrid refers to small, non-granular, non-rigid film-like particles. The film-like fibrid particles have two of their three dimensions in the order of microns, and have one dimension less than 1 micron. In one embodiment, the fibrids used in the present invention have an average length in the range of 0.2-2 mm, and average width in the range of 10-500 microns, and an average thickness in the range of 0.001-1 microns. Meta-aramid fibrids may, e.g., be obtained by shear precipitation of polymer solutions into coagulating liquids as is well known from U.S. Pat. No. 2,999,788. Fibrids of wholly aromatic polyamides (aramids) are also known from U.S. Pat. No. 3,756,908, which discloses a process for preparing poly(meta-phenylene isophthalamide) (MPD-I) fibrids. Para-aramid fibrids can, e.g., be obtained by high shear processes such as for example described in WO2005/059247, which fibrids are also called jet-spun fibrids.

Aramid short-cut fiber, also known as aramid floc, is known in the art. It is generally obtained by cutting aramid fibers to the desired length, in general a length in the range of 0.5-25 mm.

Pulp is an irregularly shaped fibrous structure. Pulp consists of short fibers which have been subjected to a shearing force leading to the formation of fibrils, which are mostly connected to a "stem" of the original fiber, while thinner fibrils peel off from the thicker fibrils. These fibrils are curly and sometimes ribbon-like, and show variations in length and thickness. Pulp is obtained by fibrillating short fibers (also referred to as short-cut), e.g. in a refiner. Hence, pulp comprises fiber stems and fibrils. Due to the fibrillation, pulp has a different morphology and different properties compared to continuous fiber or short-cut fiber. In particular, pulp is much shorter and has a higher specific surface area.

Each of the aramid fiber used in the present invention may be para-aramid fiber, meta-aramid fiber, or a combination thereof.

In the context of the present specification aramid refers to an aromatic polyamide comprising or consisting of aromatic fragments directly connected to one another via amide fragments. Methods to synthesize aramids are known to those skilled in the art and typically involve the polycondensation of aromatic diamines with aromatic diacid halides. Aramid fibers may exist in the meta- and para-form, both of which may be present in the paper sheet. Aromatic copolymer fibers for whose production the monomers p-phenylenediamine and/or terephthaloyl dichloride are partially or completely substituted by other aromatic diamines and/or dicarboxylic acid dichlorides may also be present in the paper sheet.

For the purpose of this application, the term para-aramid refers to a class of wholly aromatic polyamide polymers and copolymers having at least 60%, preferably at least 80% and more preferably at least 90% of para-oriented bonds between the aromatic moieties. In one embodiment, at least 95% or all (i.e. 100%) of the bonds are para-oriented bonds.

Typical para-aramids are poly(para-phenylene terephthalamide) (PPTA), poly(4,4'-benzanilide terephthalamide), poly(para-phenylene-4,4'-biphenylene dicarboxamide) and poly(para-phenylene-2,6-naphthalene dicarboxamide), 5,4'-diamino-2-phenylbenzimidazole or poly(para-phenylene-co-3,4'-oxidiphenylene terephthalamide) or copolymers thereof. Preferably, the paper sheet comprises PPTA fibers.

For the purpose of this invention, the term meta-aramid refers to a class of wholly aromatic polyamide polymers and copolymers having at least 70%, preferably at least 80% and more preferably at least 90% of meta-oriented bonds between the aromatic moieties. In one embodiment, at least 95% or all (i.e. 100%) of the bonds are meta-oriented bonds. The amide bonds between the aromatic moieties are thus located substantially in the meta-oriented or nearly meta-oriented positions of the aromatic rings (as e.g. in a 1,3-phenylene group or 1,3-naphthalene group). Meta-aramids may be produced by polymerization of meta-type aromatic amine and meta-dicarboxylic acid halide.

Suitable aromatic meta-diamines are meta-phenylenediamine, 3,4'-diaminodiphenylether, and 3,4'-diaminodiphenylsulfone; and derivatives thereof having substituents such as halogen atoms and/or alkyl groups having 1 to 3 carbon atoms, attached to the aromatic cyclic structures thereof, for example, 2,4-toluylenediamine, 2,6-toluylenediamine, 2,4-diaminochlorobenzene, and 2,6-diaminochlorobenzene, may be employed. Preferably, meta-phenylene diamine or mixed diamines containing meta-phenylene diamine in a content of 85 molar % or more, more preferably 90 molar % or more, still more preferably 95 molar % or more are employed.

Suitable aromatic meta-dicarboxylic acid dihalides are isophthalic acid halides, for example, isophthalic acid chloride and isophthalic acid bromide; and derivatives thereof having substituents, for example halogen atoms and/or alkoxy groups having 1 to 3 carbon atoms, for example 3-chloroisophthalic acid chloride and 3-methoxyisophthalic acid chloride may be employed. Preferably, isophthalic acid chloride and mixed carboxylic acid halides containing isophthalic acid chloride in a content of 85 molar % or more, more preferably 90 molar % or more, still more preferably 95 molar % or more, are employed.

In one embodiment, the meta-aramid used in present invention is co-poly(m-phenylene isophthalamide) comprising at most 5 molar% of aromatic moieties other than m-phenylene. In another embodiment, the meta-aramid is poly(m-phenylene isophthalamide).

The paper sheet comprises resin. In one embodiment, the paper sheet is impregnated with resin. The amount of resin in the paper sheet may vary widely, it may e.g. be in the range of 5 to 90 wt%, preferably 20 to 60 wt% (based on the weight of the prepreg sheet, i.e. the paper sheet comprising the resin). The exact amount of resin may vary within wide ranges, and may depend on the cell size, the paper weight and the core density of the honeycomb aimed for. Due to the simple process of instant invention, the amount of resin present in the paper sheets will usually be the same as present in the (assembly of) honeycomb structure(s).

The paper sheet may be impregnated with a thermosetting or a thermoplastic resin. Suitable resins should be capable of coating the paper sheet, and, after curing or hardening, provide strength to the honeycomb. Suitable resins are known in the art. They can, e.g., be selected from the group of phenolic resins, e.g., curable phenol formaldehyde resins, polyimide, polyurea, polyurethane, melamine formaldehyde, polyester, polycyanate, bismaleimide, vitrimer and epoxy resins. Vitrimer resins (also referred to as malleable thermoset resins) have e.g. been described in WO2020/051506. Suitable thermoplastic resins are e.g. polyarylether ketones (such as polyetheretherketone and polyetherketoneketone), polyphenylene sulfide and polyethylene sulfone. Mixtures of resins are also often used, including mixtures of the thermoset resins mentioned above with thermoplastic resins, such as synthetic thermoplastic rubber.

The paper sheet comprising resin, i.e. the prepreg sheet, can be manufactured by methods known in the art, e.g., encompassing impregnating the paper with a resin as described above in the liquid phase, e.g., in the form of a melt, a solution, or a dispersion, and allowing the resin to solidify. The resin may be applied in multiple, but preferably in one step. The paper sheet may be impregnated with the resin by any conventional technique, e.g. by applying the resin by spraying, dipping the paper sheet into or passing it through a resin bath or by kiss roll coating.

It is an advantage of an embodiment of the instant method that the resin is only applied to the paper sheets instead of to the assembly of honeycomb structures. It is much less complicated to apply the resin to a paper sheet and may also result in a better, i.e. more even distribution of the resin compared to applying resin to a complex three-dimensional honeycomb structure. Furthermore, different methods may be selected to apply resin to a paper sheet, while the resin impregnation of honeycombs requires the dipping of the large assemblies of honeycomb structures.

Subsequently, the impregnated sheet may be dried to result in a dry paper sheet comprising resin, i.e. the prepreg sheet. To avoid the full hardening of the resin when using a thermoset resin, the drying preferably is carried out below the curing temperature of the thermoset resin.

In one embodiment, the prepreg sheet or the paper sheet may be pre-formed in a shape similar to the first structure or similar to a wave. The pre-forming may improve the subsequent assembly of the honeycomb structures.

Preferably, no further resin is used in instant method other than the resin comprised in the prepreg sheet. Hence, preferably no node adhesive or resin is applied and also no additional resin is applied to the assembly of honeycomb structures. This also has the advantage that the assembly of honeycomb structures preferably consists of only two materials, one resin and a paper sheet, preferably a paper comprising aramid fibers. Such a two-component system simplifies the reclaiming of the fibers (in particular aramid fibers) and/or the resin during the recycling (from waste material and/or after use) of the honeycombs.

In the case where the prepreg sheet comprises thermoplastic, vitrimer or vitrimer-like resin the recycling of honeycomb waste material would also be possible via injection molding (i.e. without separating the (aramid) fiber from the resin). In any event, a two-component system allows an easier and more efficient separation process for the recycling of waste or end-of-life honeycomb materials.

Present invention is also directed to an assembly of honeycomb structures obtained by any of the embodiments of the method described above.

Preferably, the assembly of honeycomb structures has similar properties as honeycombs produced by the expansion method.

The hexagonal cells of the assembly of honeycomb structures generally have a cell size in the range of 1.5-25 mm.

It is normally measured from 10 consecutive cells, on parallel edges where the paper sheets are adhered, and divided by 10 to get the average cell size of a single cell. As described above, for this invention the cell size corresponds to the rod height.

In one embodiment, the cell size is in the range of 2-10 mm, in particular 2.5 to 8 mm. In another embodiment the cell size is in the range of above 8 to 15 mm. In a further embodiment the cell size is in the range of above 15 to 25 mm, in particular 17-22 mm.

The resin-impregnated honeycomb core of the present invention generally has a core density in the range of 10 - 200 kg/m³, in particular 20 - 150 kg/m³.

After the manufacturing of the assembly of honeycomb structures, the assembly, often in form of a block having a depth, may be cut into slices after process step j), i.e. after setting (curing or hardening) of the resin by exposing it to the required temperature and removal of the rods. The assembly of honeycomb structures may be cut to result in several arrays of hexagonal cells.

One or two facing sheets may be applied to the assembly of honeycomb structures or slices thereof. In this way, a sandwich panel comprising at least a part of the assembly of honeycomb structures and one or two facing sheets may be obtained. The facing sheets may be based mainly on non-aramid fibrous material, e.g. they may be based mainly on carbon fibers or glass fibers (e.g. such sheets or composites may comprise at least 80 wt% of carbon fiber or glass fiber material, more preferably at least 90 wt% or even at least 95 wt% of carbon fiber or glass fiber material or even consisting of carbon fiber or glass fiber material, calculated based on the fibrous components of such paper). The sheets of composites that serve as face sheets of sandwich panels will usually also comprise resin, such as e.g. phenolic resin or epoxy resin. The face sheets may be attached by known methods, e.g. by applying a resin or by means of glue (e.g. in the form of a tape or sheet).

Present invention also pertains to a shaped article comprising (a part of) the assembly of honeycombs or a sandwich panel.

In particular, a shaped article may be an aircraft part comprising (a part of) the assembly of honeycombs or a sandwich panel. Such aircraft part may e.g. be a rudder, a spoiler, a part of the cabin interior or an aircraft exterior wall.

Instant method is particularly suited to manufacture complex honeycomb shapes while reducing the amount of waste occurring during manufacturing. When using the expansion method, cubic honeycomb structures are produced and the structures are cut into the desired shape by cutting, drilling or milling away superfluous material for creating an article of the desired shape, e.g. the above described aircraft parts. This creates waste in the form of cured or hardened three-dimensional material. With instant method the waste material can be avoided or at least reduced. Hence, instant application is also directed to a method wherein the assembly of honeycomb structures has a near-net shape or net shape. Honeycomb structures having a near-net shape or net shape typically have a shape other than a cubic or rectangular cuboid shape or have a cubic or rectangular cuboid shape including a void, cavity or other complex or irregular geometric features. Assemblies of honeycomb structures with net shape or near-net shape may e.g. include geometric features such as, but not limited to, cavities, non-parallel surfaces, round or curved surfaces, angled or tapered surfaces, protrusions, gaps, or other difficult to form shapes and geometries. Because of these complex geometries which are realized during the initial production of the item (in this process during the assembly, in particular steps a) to g)) the assembly of honeycomb structures may have a shape very close to the final, or net, shape of the desired part or article. This reduces the need for surface or shape finishing and minimizes or avoids the use of finishing and shaping methods like machining, cutting, drilling or milling and also the occurrence of waste material. As used herein, "near-net shape" refers to being of a geometry and size requiring little or no machining and processing. As used herein, the "net" refers to being of a geometry and size requiring no machining and processing. For example, net-shaped or near-net-shaped honeycomb structures may be produced by first cutting the paper sheets or prepreg sheets to the desired dimensions and shapes. For example, prepreg sheets of not-rectangular shape or comprising cut-outs may be used in the method. In this way honeycomb structures with openings (e.g. corresponding to a window location in a cabin interior part) can be created. By using non-rectangular prepreg sheets of increasing or decreasing size at the edges, ramps (i.e. tapered surfaces) in the assembly of honeycomb structures may be created. The non-rectangular prepreg sheets may be obtained by cutting off a corner or a part from a reactangular prepreg sheet. The cutting angle may be adapted along the length of the prepreg sheet(s) or material may be cut-off step-wise, so that once the prepreg sheet is placed to form the cellular honeycomb structures, the ramp in the assembly of honeycomb structures will be at the desired angle. Particularly advantageous is that the same full length rods of the same cross section and cross sectional dimensions may be used for creating such irregularly shaped assembly of honeycomb structures.

Present invention is also directed to an apparatus for carrying out the method, wherein the apparatus comprises at least four rows of rods and whereby all rods have a rectangular cross section. Preferably, the rods have a non-sticky surface, more preferably, rods consisting of polytetrafluoroethylene or silicone or rods comprising a surface comprising polytetrafluoroethylene, silicone or a release agent are used. Further embodiments of the materials used for the rods and the release agents have been described above.

In one embodiment, the rods of the apparatus from directly consecutive rows are offset to each other and the rods of every second row are arranged in a position on top of each other.

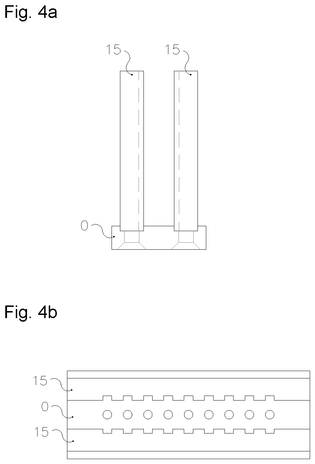

For a larger scale process it may also be advantageous if the apparatus includes side walls which are placed perpendicularly to the length of the rods, i.e. at the ends of the rods. To fix the position of the rods at equal distance and in parallel position, the side walls may e.g. comprise slits wherein the rods can be positioned (as described below in the example section) with slits. It may also be advantageous if the support (0) includes holes, preferably corresponding in part to the position of the rods of the first row of rods (see Fig. 4b). After assembly and hardening of the resin, the holes may used to push against the first row of rods to separate the assembly of honeycomb structure including the rods from the rest of the apparatus.

It will be clear to the skilled person that various preferred embodiments described herein can be combined, unless they are mutually exclusive.

The invention is further elucidated by the following, not-limiting examples.

### Analysis

### 1. Compression strength

The compression strength of the assembly of honeycombs is determined according to ASTM-C365.

### 2. Density

The density of the assembly of honeycombs is determined according to ASTM-C271.

### Example 1

A resin impregnated assembly of honeycomb structures (i.e. a honeycomb block) according to the process of the invention was prepared as follows:
A total of 12 Twaron^{®} paper strips (type 8311-1.8mil) with a grammage of 40 g/m², a length of 200 mm and a width of 12 mm, were impregnated in a solution of phenolic resin (type Bakelite) having a dry solid content of 20% (solvent isopropanol). After impregnation, the strips were dried, resulting in prepreg sheets with an estimated resin content of 35 wt.%.

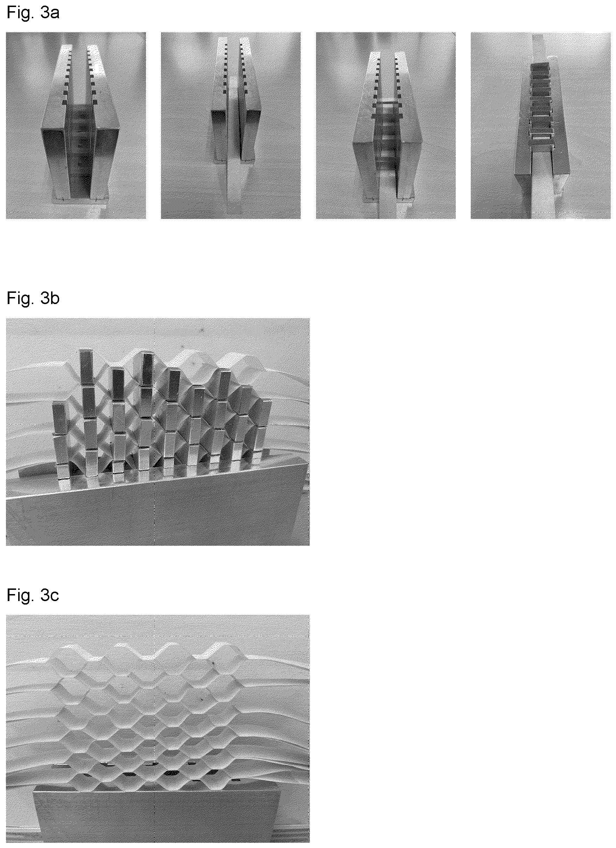

The impregnated strips were used to make a honeycomb with a cell size of 10 mm. To this end, a first row of rods was placed on a support inbetween side walls (Fig. 3a, first panel). The first prepreg sheet was placed above (Fig. 3a, second panel). Subsequently, a second row of rods was placed on top of the first prepreg sheet (Fig. 3a, third panel). This was repeated until the last row of rods was placed (Fig. 3a, fourth panel). All rods were made from aluminum and wrapped with a polytetrafluoroethylene fabric. In Fig. 3a it can be seen that the rods are placed (and slid down towards the support) in side walls. As can be seen, the side walls include multiple slits for the positioning of the rods. A schematic representation of the support (0) and the side walls (15) including slits is also shown in Fig. 4. In particular, Fig. 4a shows a side view and Fig. 4b a top view. After assembly, the whole apparatus including rods, support, prepreg sheets, pressure means (not shown) and side walls was pre-heated at 65°C for 30 minutes in an oven. Subsequently, the resin was cured by a heat treatment at 180°C for 60 minutes in an oven. After curing, the side walls were removed (Fig. 3b) and finally the rods were removed to result in a cured assembly of honeycomb structures (see Fig. 3c). The resulting assembly of honeycomb structures with 38 hexagonal cells had a density of 17.9 kg/m³ and a compression strength of 0.278 MPa.

### Example 2

A resin impregnated assembly of honeycomb structures was prepared as for example 1, except for using a Bakelite solution for impregnation having a dry solid content of 47% (in isopropanol) and resulting in impregnated strips with an estimated resin content of 79 wt%.

The result was an assembly of honeycomb structures with 39 hexagonal cells with a density of 41.7 kg/m³ and a compression strength of 0.716 MPa.

## Claims

1. A method for manufacturing an assembly of honeycomb structures comprising the steps of:
a) placing a first row of rods adjacent to a support,
b) placing a first prepreg sheet adjacent to the first row of rods,
c) placing a second row of rods adjacent to the first prepreg sheet such the second row of rods is off-set from the position of the first row of rods, and forming the first prepreg sheet between the rods of the first row of rods and the rods of the second row of rods to form a first structure,
d) placing a second prepreg sheet adjacent to the second row of rods,
e) placing a third row of rods adjacent to the second prepreg sheet such the third row of rods is positioned corresponding to the position of the first row of rods, and forming the second prepreg sheet between the rods of the second row of rods and the rods of the third row of rods to form the first structure into a honeycomb structure,
f) repeating steps b), c), d) and e) at least one time to create an assembly of honeycomb structures,
g) completing the forming process by arranging a row of rods adjacent to the assembly of honeycomb structures,
h) optionally exposing the assembly of honeycomb structures to a temperature that softens the resin for provisionally adhering the formed prepreg sheets to each other at the locations where two prepreg sheets are in contact to provisionally consolidate the honeycomb structure,
i) exposing the assembly of honeycomb structures with the rows of rods inside to a temperature that causes hardening of the resin, and
j) removing the rows of rods after process step i),
**characterized in that** the rods have a rectangular cross section and that the prepreg sheet is a paper sheet comprising resin.

2. The method according to claim 1, wherein the paper comprises aramid fiber.

3. The method of claim 1 or 2, wherein the resin is selected from thermosetting and thermoplastic resin, preferably selected from phenolic resin, polyimide, polyurea, polyurethane, melamine formaldehyde, polyester, polycyanate, bismaleimide, epoxy resin and vitrimer resin or mixtures thereof.

4. The method of any one of claims 1 to 3, wherein no further resin is used in the method other than the resin comprised in the prepreg sheet.

5. The method of any one of claims 1 to 4, wherein the assembly of honeycomb structures is cut into slices after process step j).

6. The method of any one of claims 1 to 5, wherein rods with a non-sticky surface are used, in particular rods consisting of polytetrafluoroethylene or silicone or rods comprising a surface comprising polytetrafluoroethylene, silicone or a release agent.

7. The method of any one of claims 1 to 6, wherein the assembly of honeycomb structures comprises hexagonal cells.

8. The method of any one of claims 1 to 7, wherein the assembly of honeycomb structures has a near-net shape or net shape.

9. An assembly of honeycomb structures obtained by the method of any one of claims 1 to 8.

10. A sandwich panel comprising at least a part of the assembly of honeycomb structures of claim 9 and one or two facing sheets.

11. A shaped article comprising a part of the assembly of honeycomb structures of claim 9 or the sandwich panel of claim 10.

12. An aircraft part comprising a part of the assembly of honeycomb structures of claim 9, the sandwich panel of claim 10, and/or the shaped article of claim 11, wherein the aircraft part is preferably a rudder, a spoiler, a part of a cabin interior or an aircraft exterior wall.

13. Apparatus for a method according to any one of claims 1 to 8, wherein the apparatus comprises at least four rows of rods and whereby all rods have a rectangular cross section.

14. Apparatus according to claim 13, wherein the rods have a non-sticky surface, preferably the rods consist of polytetrafluoroethylene or silicone or the rods comprise a surface comprising polytetrafluoroethylene, silicone or a release agent.

15. Apparatus according to claim 13 or 14, wherein rods from directly consecutive rows are offset from each other and the rods of every second row are arranged in corresponding positions or on top of each other.
